# EUROPEAN PATENT SPECIFICATION

(11) **EP 3 314 999 B1**
(45) Date of publication and mention of the grant of the patent: **25.12.2019**
(21) Application number: 17198788.6
(22) Date of filing: 27.10.2017
(51) Int. Cl.: A01C 7/20, A01B 63/22

(54) **SEED DRILL**
EINZELKORNSÄMASCHINE
SEMOIR

(30) Priority: 31.10.2016 GB 201618328
(43) Date of publication of application: 02.05.2018
(73) Proprietor: Brock, Arthur Philip Harvey, Thaxted, Essex CM6 2RH (GB)
(72) Inventor: Brock, Arthur Philip Harvey, Thaxted, Essex CM6 2RH (GB)
(74) Representative: Dolleymores

(56) References cited:
- WO-A1-2008/048178
- WO-A1-2013/030534
- GB-A- 2 030 036
- US-A- 4 696 349
- US-A1- 2004 094 314
- US-B1- 6 684 962
- US-B2- 7 610 867

## Description

The present invention relates to a seed drill and particularly to the type of seed drill that is towed behind a tractor, or similar vehicle, for use in commercial planting.

Most commercial seed drills comprise two principle components, the first being the hopper for carrying the seed to be planted and the second being a tool carrier, normally in the form of a frame, (hereinafter referred to as the drill frame), which is supported in close proximity to the ground. The drill frame normally has one or more arrays of regularly spaced seed tubes, or other devices, for dispensing seed on, or into, the ground and will normally additionally comprise a corresponding array, or arrays, of furrow forming devices, such as tines or disc coulters, for forming furrows into which the seed is deposited. There may also be an array of devices for subsequently covering the seed in the furrows.

On some drill frames all the tools are fixed in position and on other drill frames the seed tube may be carried by independent depth control wheels, or sometimes the disc coulters can control the position of the seed tube relative to the ground. Regardless of the type of components mounted on the drill frame, it is desirable that the drill frame remains in relatively close proximity to the ground and that the tools carried by the drill frame operate in a consistent manner. In addition, in order to provide efficient operation of the seed drill and avoid the need for the hopper to be constantly replenished, the hopper has to be of a significant size and thus, when full, of a significant weight. Also it is normally convenient for a drill frame and hopper to be attached to a tractor and operated as a single unit.

The requirement for a seed drill to carry a relatively heavy hopper over possibly soft ground, conflicts with the requirement that a drill frame of the seed drill provide a consistent stable platform for tools mounted thereto, requiring any weight carried by the frame to be evenly distributed over the frame and for the weight to be relatively consistent during operation of the seed drill.

Known arrangements of seed drills address the above issues in one of three principle ways. An example of one way this is tackled is illustrated by the Horsch CO8 Seed Drill. Here the hopper is positioned immediately behind a tractor and supported by a towing hitch at one end being attached to the tractor and by two transport wheels at an opposite end. Attached to the back of the hopper and behind the transport wheels is a drill frame, extending transversely behind the hopper and which has a central portion and two foldable wings to assist in transportation. The drill frame is supported by a line of closely spaced press wheels located behind the drill frame and a pair of large caster wheels located in the region of the front corners of the drill frame. The drill frame may be raised or lowered relative to the press and castor wheels and these function as depth control wheels. With this arrangement, although the drill frame is fixed to the back of the hopper and therefore the drill frame and hopper function as one unit, the weight of the hopper is carried independently of the drill frame, which is supported only by the press and caster wheels.

Although such an arrangement works satisfactorily, the overall length of the seed drill is relatively long and it can be difficult to manoeuvre, especially when starting to reverse, where the casters have to rotate through 180 degrees and therefore at some point will face in a direction transverse to the direction of the transport wheels.

A second alternative arrangement is found, for example, in the Horsch Seed Drill, Model Sprinter 8ST. Here the hopper is positioned on the centre of the drill frame. This type of drill normally necessitates hydraulic compensation to spread the weight of the hopper and any seed contained therein across the whole width of the drill frame. The drill frame and integral hopper is supported by some forty plus closely spaced (and thus fixed forward facing) press wheels, arranged in two rows along respective front and rear edges of the drill frame. Here, although the weight of the hopper will vary considerably in use, this weight is additionally distributed by the large number of press wheels. However, in certain conditions the weight of the hopper may not always be evenly distributed. Furthermore, because the rows of press wheels have to be fixed straight ahead and because these rows of wheels are significantly spaced apart from each other in the longitudinal direction of the seed drill, it is not normally possible to make tight headland turns without first lifting the front row of press wheels.

A third type of seed drill is manufactured by Weaving Machinery, Lemken and others. In this arrangement the seed hopper is mounted on a platform which has a towing hitch at a front end to be supported by a tractor and two transport wheels at a rear end behind the hopper. A transversely extending and foldable drill frame is attached in a non-articulating manner to the back of the platform, so that it is located both behind the hopper and the transport wheels. This drill frame is free floating, in the sense that it may move freely up and down when in a working configuration, where it is supported by a number of depth control wheels mounted to the drill frame. This has the advantage that the weight of the hopper has no influence on the operation of the seed drill, for the drill frame is independently supported by the depth control wheels.

With this arrangement the drill frame has to be raised, to lift the tools and the depth control wheels clear of the ground, before making a tight headland turn. This is necessary in order to prevent these scrubbing or being damaged as the seed drill turns on the transport wheels situated at the back of the hopper. Raising the drilling frame causes the drilling frame to be cantilevered on the transport wheels, reducing the weight on the rear of the tractor, which in certain conditions may make it difficult for the tractor to complete the turn. In transport this cantilever effect, lifting the weight off the rear wheels of the tractor, can make transport at standard road speeds difficult.

The above issues can be addressed by detaching the drilling frame from the rear of the hopper and instead attaching it to a three point linkage on the rear of tractor. The seed hopper can then be attached to the front of the tractor with seed transferred from the front hopper to the drilling frame by means of a large diameter seed tube. This front hopper results in the driver being sat well back from the front of the complete unit, sometimes making it difficult when emerging from the field entrances or at road junctions. Also, it is not easy to detach the tractor from a seed drill mounted up in this way as the drill frame has to be removed from the rear of the tractor and the hopper has to be removed from the front of the tractor along with the large diameter seed tube connection.

Examples of known seed drills are disclosed in patent applications with publication numbers US 4,696,349 A, WO 2008/048178 A1, US 2009/0151610 A1 and GB 2030036 A.

It is an object of the present invention to provide an improved seed drill.

According to the present invention there is provided a seed drill comprising a hopper and a tool carrier having a drill frame from which seed is dispensed into or onto the ground, the hopper being supported in use by a towing hitch located at a front end of the seed drill and at least two transport wheels located behind the hopper, wherein the drill frame is arranged to be able to in use move up and down relative to the hopper and the transport wheels, wherein the drill frame is rectangular with the transport wheels located inside the rectangular frame.

By "in the drill frame" it is meant that the wheels are in the area covered by the drill frame, although they may be received in recesses extending back from a front edge of the drill frame, or the like and need not be surrounded by a peripheral edge member of the drill frame.

One advantage of a seed drill in accordance with the present invention is that, by having the transport wheels supporting the hopper from within the drill frame, the overall length of the seed drill may be reduced with the drill frame being positioned closer to the hopper. A further advantage is that, because in use during drilling the drill frame is able to move up and down relative to the hopper and the transport wheels, the depth of the seed drills and any other tools attached to the drill frame, even if fixed rigidly to the drill frame, need not be influenced by the weight of seed in the hopper, which could otherwise occur, particularly on soft ground. This is particularly advantageous because the weight of the hopper will reduce significantly as the weight of the seed reduces during the drilling operation.

Another advantage of a seed drill in accordance with the present invention is that there is no cantilever effect when the drill frame is raised.

The drill frame may comprise a plurality of tools for opening furrows and/or for dispensing seed, wherein some of the tools are located forward of the transport wheels and some of the tools are located rearward of the transport wheels.

Biasing means may be provided to transfer some of the weight of the hopper to the drill frame, to urge tools on the drill frame into contact with the ground, particularly where the ground is hard, but more preferably the drill frame is arranged to be free floating relative to the hopper. In either case the drill frame is advantageously supported by depth control wheels separate to the transport wheel.

An advantage of the drill frame being free floating, (by which it is meant that the drill frame may move freely up and down relative to the hopper and transport wheels), is that this may permit the drill frame to be more uniformly and consistently supported by the depth control wheels, irrespective of the weight of the hopper and the forces this may generate, as for example when the hopper is towed over soft ground. Furthermore the depth control wheels will substantially support only the drill frame and the tools attached thereto and thus a minimum of weight. This is desirable because the less weight each depth control wheel carries, the less likely it is to be effected by any changes in the firmness of the ground over which the wheel is travelling.

The depth control wheels may advantageously all be fixed in a forward facing direction, avoiding issues that may otherwise arise if they were to act as casters.

The depth control wheels may be arranged to be raised when in an "in work" drilling configuration and arranged to be lowered to raise the drill frame and tools carried thereon to assist when turning in a "headland configuration". An advantage of this is that the depth control wheels may permit the tools to be lifted clear of the ground when turning without transferring weight onto the transport wheels, which would result in the weight of the drill frame being, to some extent, cantilevered on the transport wheels, reducing the weight on the tractor wheels during turning. However, with the transport wheels being located in the drill frame this cantilever effect would in any case be minimised. Additionally, with the drill frame carried by a plurality of depth control wheels across its whole width, the drill frame is then more comprehensively supported when turning.

The depth control wheels are preferably substantially in transverse alignment with the transport wheels. By this it is meant that they are substantially aligned to the side of the transport wheels, although the vertical height of the axes of the transport wheels relative to the depth control wheels may be different, if only because the diameter of the transport wheels may be different to the diameter of the depth control wheels. A major advantage of the depth control wheels being in transverse alignment with the transport wheels, made possible by the transport wheels being located within the drill frame, is that it avoids any scrubbing between the wheels, which would otherwise make turning on soft ground difficult and which would also cause unacceptable stresses on the drill frame and other components of the drill frame.

Advantageously the action of lowering the control wheels moves them forward relative to the drill frame, so that they are substantially in transverse alignment with the transport wheels. This may permit the depth control wheels to be moved from an "in work" configuration, where they are located under the centre of mass of the drill frame, to a forward "headland configuration" where they are transversely aligned with the transport wheels when raising the drill frame to assist in turning. Only when making relatively tight turns is it necessary to raise the tools clear of the ground and it is primarily advantageous when making tight turns that the depth control wheels be in transverse alignment with the transport wheels.

It may be advantageous if when in an "in work" configuration the depth control wheels are located substantially towards a transverse centre line of the drill frame, for this will ensure the drill frame is uniformly supported by the depth control wheels.

Preferably the drill frame is connected to the transport wheels and hopper via a parallel linkage, which permits the drill frame to move up and down relative to the transport wheels and to be supported in an "in work" configuration by the depth control wheels, as the parallel linkage will retain the drill frame in a horizontal position, permitting a single line of transverse depth control wheels to support the drill frame.

Advantageously the seed drill further comprises one or more actuators arranged to lower the drill frame to an "in work" configuration and to raise the drill frame to a "transport configuration", where the depth control wheels are raised clear of the ground. In the "in work" configuration the drill frame is supported by the depth control wheels and is free floating relative to the transport wheels and the hopper. Raising the drill frame to a "transport configuration", where the depth control wheels are raised clear of the ground permits the drill frame to be transported. However the invention, in placing the transport wheels in the drill frame, reduces the cantilever effect that would otherwise arise if the drill frame were mounted behind the transport wheels.

Preferably the drill frame comprises a central portion, which in a transport configuration is supported by the transport wheels, and two wings extending to respective sides of the central portion, which wings may be folded upwardly. This arrangement permits the wings to be folded vertically when in the transport configuration. Where the central portion of the drill frame is supported by the parallel linkage, the parallel linkage retains the central portion in a substantially horizontal plane, ensuring the wings are retained vertically. The wings may each comprise two foldable portions, permitting the distal most portions to be double folded in behind the hopper.

The seed drill will preferably comprise an array of tools transversely aligned across the drill frame to permit seed to be evenly drilled. It is advantageous if some tools which are in longitudinal alignment with the transport wheels are set back relative to what would otherwise be adjacent corresponding tools, in order to permit the transport wheels to be accommodated in the drill frame. The transport wheels are preferably positioned in locations where they may follow the wheels of a tractor towing the seed drill and preferably the drill frame comprises tines located behind the transport wheels, which tines are arranged to break up wheeling's made by the transport wheels.

The seed drill will normally comprise a plurality of seed tubes transversely spaced across the drill frame and the seed drill may further comprise means to selectively prevent seed being dispensed from selected seed tubes which are longitudinally aligned with the transport wheels. An advantage of this is that seed may be selectively dispensed or not dispensed, permitting, for example, seed to be dispensed except when the seed drill is running along sprayer tramlines, or what will become sprayer tramlines, where the seed would be wasted, with sprayer tramlines occurring possibly less often than the drill passes over the field.

The drill frame may be mounted to the rest of the seed drill by a three point linkage. An advantage of this is that, if desired, it may be detached and instead mounted directly to a three point linkage on the back of tractor and fed by a smaller hopper on the front of the tractor, which may be advantageous when drilling small acreages or where it is difficult to manoeuvre a large seed drill.

Two embodiments of the present invention will now be described, by way of example only, with reference to the accompanying drawings, in which like numerals are used throughout to indicate like parts and of which:
Figure 1 is a front perspective view of a seed drill in accordance with the present invention, shown in an "in work" configuration;
Figure 2 is a rear perspective view of the seed drill of Figure 1;
Figure 3 is a plan view of the seed drill of Figures 1 and 2;
Figure 4 is a front elevation of the seed drill of Figures 1 to 3;
Figure 5 is a side elevation of the seed drill of Figures 1 to 4;
Figure 6 is a corresponding side elevation to that of Figure 5, but with the depth control wheels lowered;
Figure 7 is an enlarged section of the perspective view of Figure 2;
Figure 8 is a perspective view corresponding to Figure 2 but showing the seed drill in a folded, transport configuration;
Figure 9 is a side elevation of the seed drill folded as illustrated in Figure 8;
Figure 10 shows a section of a frame of the seed drill of Figures 1 to 5 with disc coulters fitted;
Figure 11 is a perspective view of one of the disc coulters of Figure 10 shown prior to mounting on a tine; and
Figure 12 corresponds to Figure 11 but shows the disc coulter mounted on the tine.

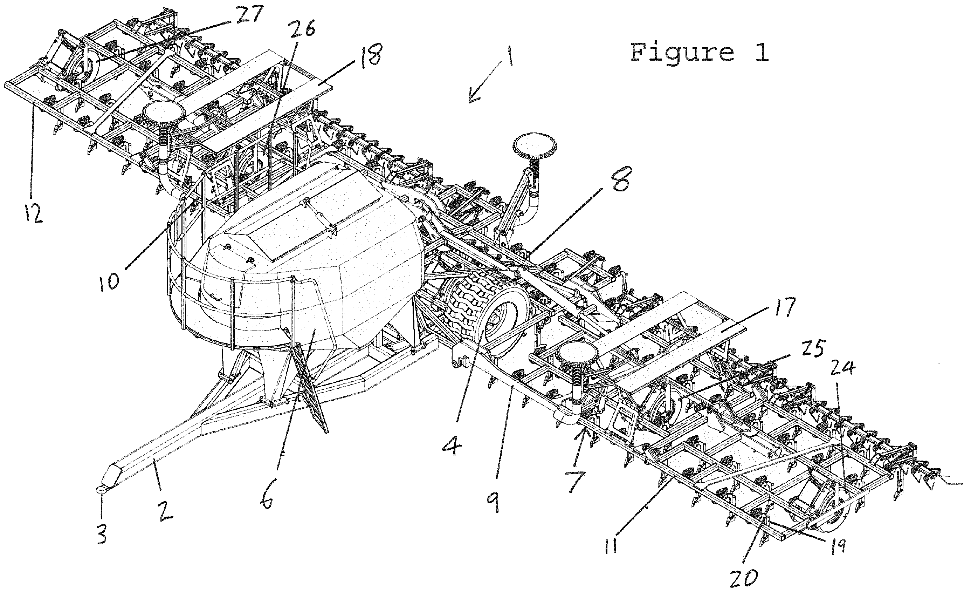

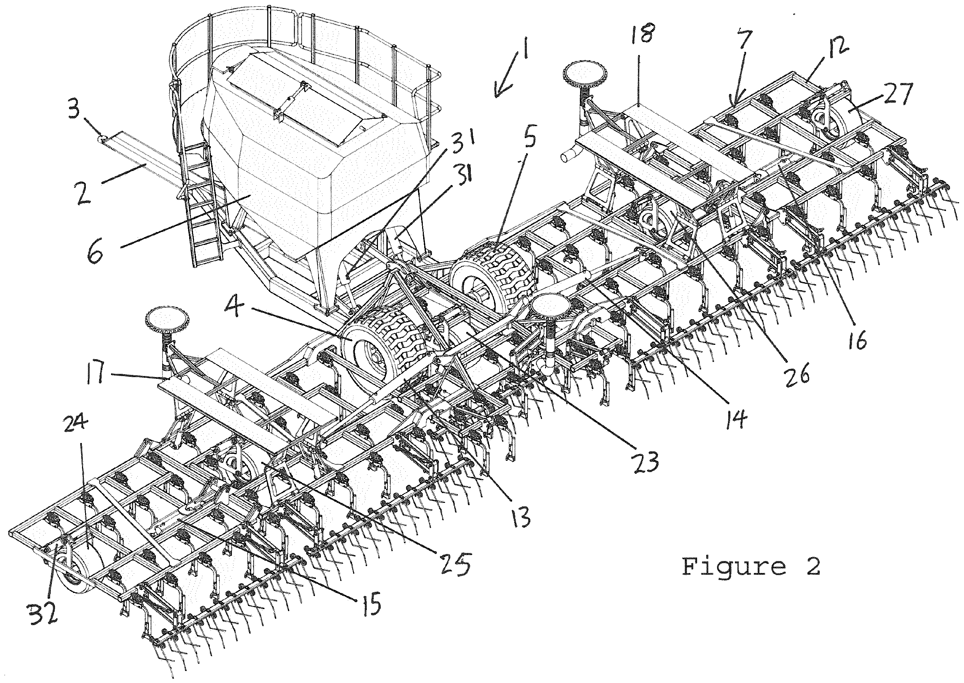

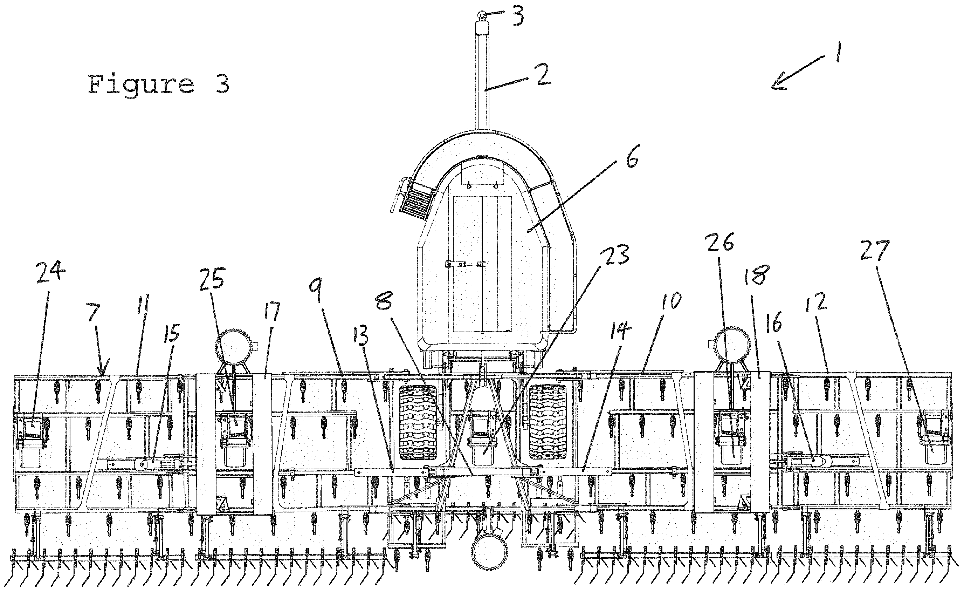

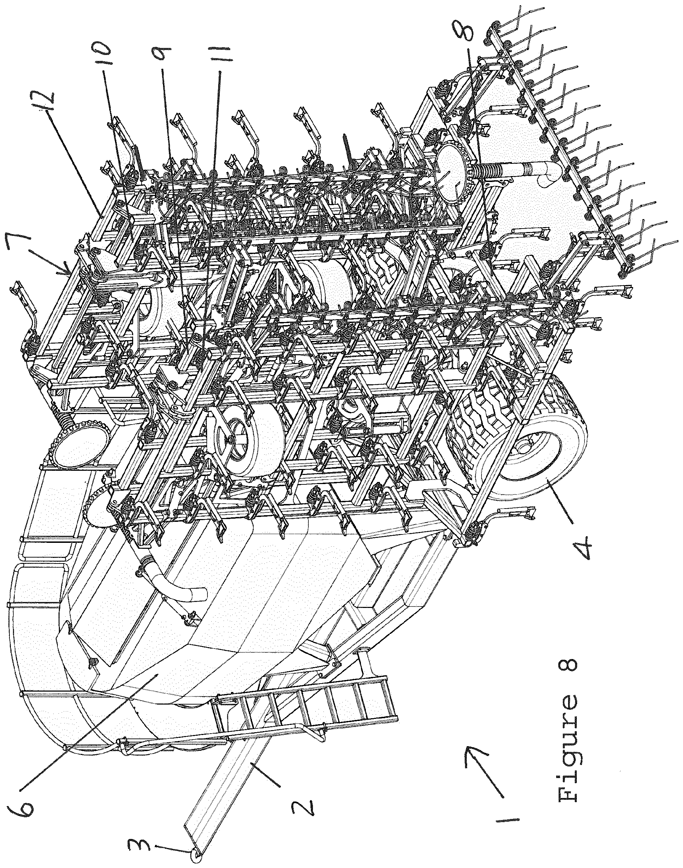

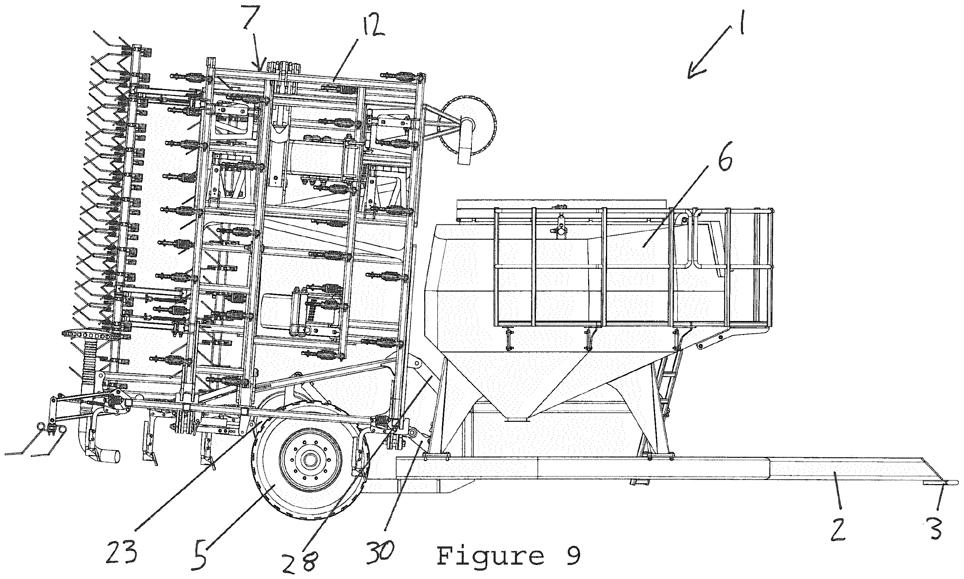

Referring now to Figures 1 to 5 these show a seed drill, indicated generally as 1, having a drawbar 2 with a tow hook 3 at the front end and transport wheels 4 and 5 mounted to a rear end thereof. Supported on the drawbar 2 is a hopper 6 and behind the hopper 6 is located a drill frame 7. The drill frame 7 comprises a central portion 8, a left hand inner wing 9, a right hand inner wing 10, a left hand outer wing 11 and a right hand outer wing 12 which can be folded by respective hydraulic rams 13 to 16 to the transport configuration illustrated in Figures 8 and 9.

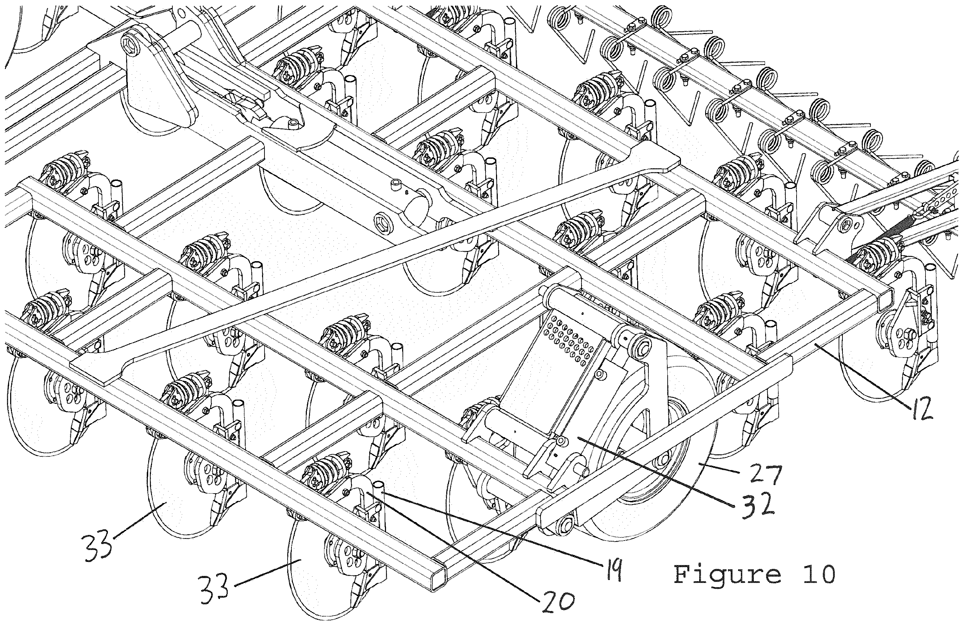

Above the left hand inner wing 9 and the right hand inner wing 10 are located respective mountings 17 and 18 for hoses (not shown), used for pneumatically conveying seed from the hopper 6 to seed tubes 19 located on the back of respective tines 20, described in greater detail later with respect to Figures 10 to 12.

The tines 20 are for opening furrows to receive seed from the seed tubes 19 in a conventional manner.

Those seed tubes 19 and tines 20, which are located on the central portion 8 of the drill frame 7 and are in line with the transport wheels 4 and 5, are set back to enable them to be accommodated behind the transport wheels 4 and 5.

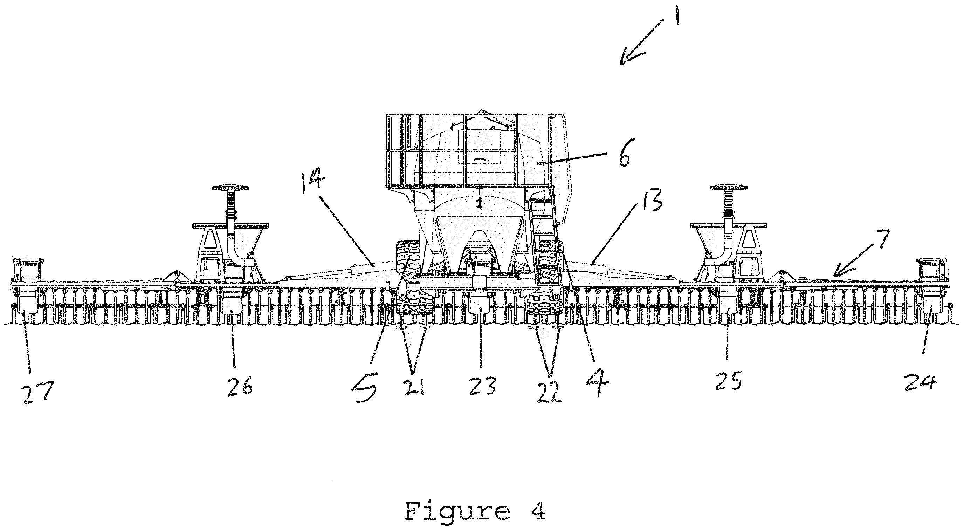

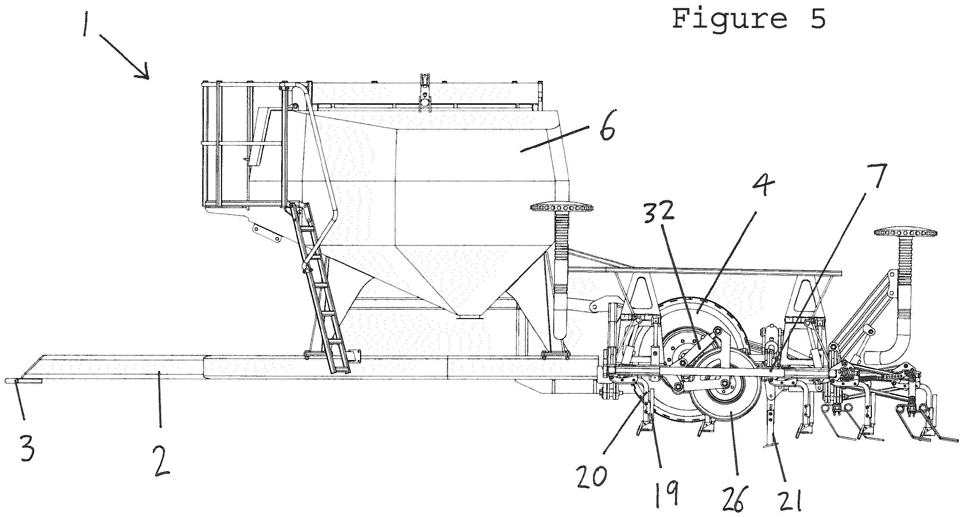

As can be best seen from Figures 4 and 5, the central portion 8 of the drill frame 7 includes two pairs of additional tines 21 and 22. These break up the wheelings left by the tractor towing the seed drill 1 and by the transport wheels 4 and 5.

The central portion 8 of the drill frame 7 has mounted towards its centre a depth control wheel 23 and each of the inner and outer wings 9 to 12 has a corresponding depth control wheel 24 to 27 mounted towards to an outer edge thereof. These control the depth of the seed tubes 19 and tines 20.

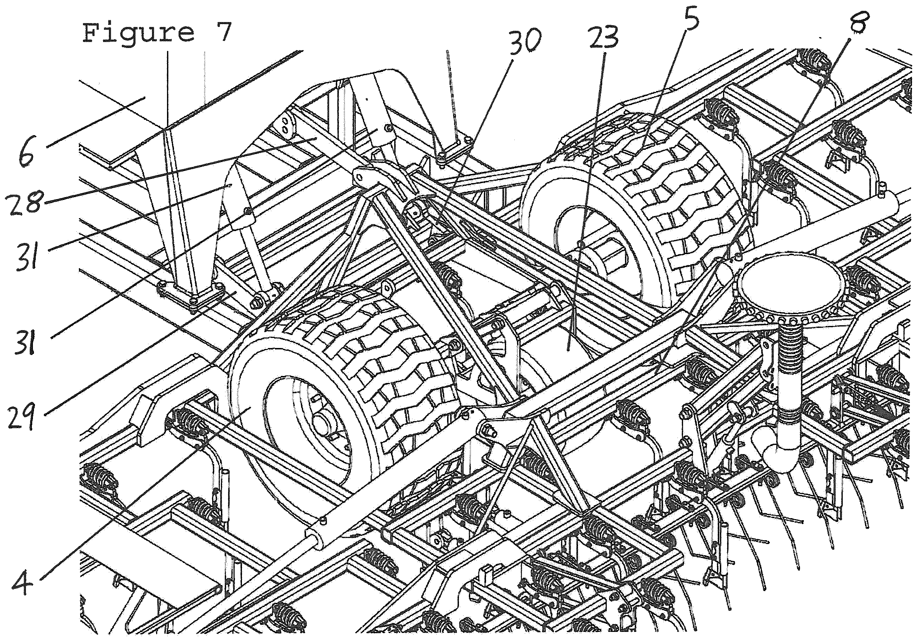

The inner and outer wings 9 to 12 of the drill frame 7 are all pivotally connected to respective adjacent ones of the inner and outer wings 9 to 12 and to the central portion 8 of the drill frame 7. This not only permits them to be folded, as described above, but also permits the inner and outer wings 9 to 12 to flex and follow the contours of the land. Furthermore the central portion 8 of the drill frame 7 is connected to the drawbar 2 by a parallel linkage mechanism, comprising an upper tie bar 28 and two lower connection bars 29 and 30, which can perhaps most clearly be seen in Figures 7 and 9. This linkage 28, 29, 30 may be arranged to be free floating when in the "in work" configuration of Figures1 to 5, allowing the central portion 8 of the drill frame 7 to be free floating such that the depth control wheel 23 does not bear any of the weight of the hopper 6 and so that the drill frame 7 cannot be supported in this mode by the transport wheels 4, 5. However, the parallel linkage 27, 28, 29 maintains the drill frame 7 in a horizontal plane, permitting the single one dimensional array of depth control wheels 23 to 27, located substantially on a central transverse axis of the drill frame 7, to support the drill frame 7.

Referring now to Figure 5, this shows the depth control wheels 23 to 27 in the "in work" configuration, where they are raised by respective hydraulic rams 32. With the depth control wheels 23 to 27 raised the drill frame 7 adopts the lower "in work" configuration, illustrated in Figures 1 to 5, where the end of the seed tubes 19, tines 20 and the pairs of additional tines 21 and 22 extend into the soil.

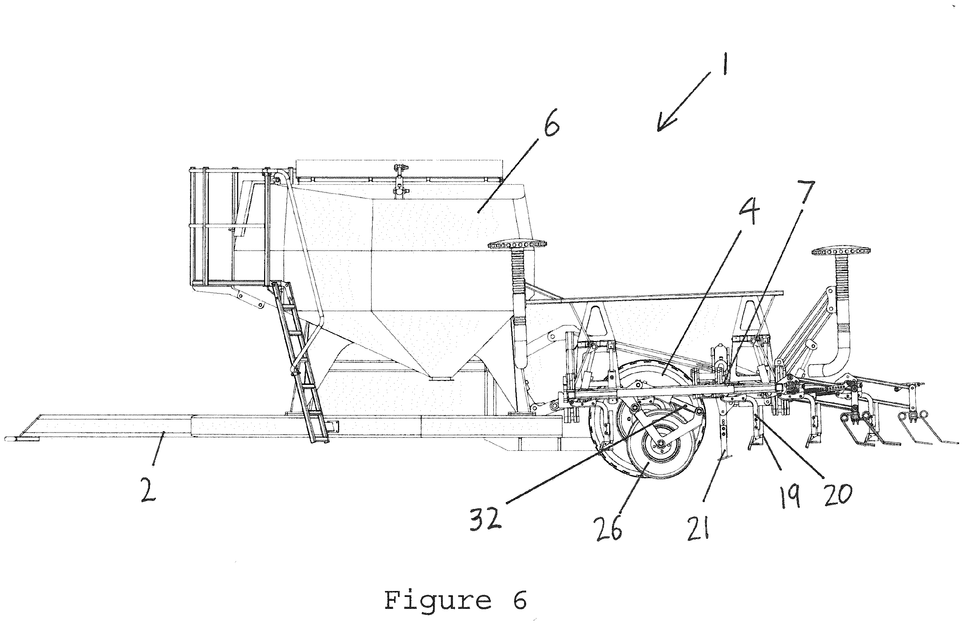

When reaching a headland the depth control wheels 23 to 27 are lowered, to the position shown in Figure 6, raising the drill frame 7 and thus raising the seed tubes 19, tines 20 and pairs of additional tines 21, clear of the ground. This permits a tight turn to be performed without damaging any of the seed tubes 19, tines 20 or pairs of additional tines 21. In this "turning configuration", illustrated in Figure 6, the action of lowering the depth control wheels 23 to 27 also brings them forward in the drill frame 7, from the position shown in Figure 5, where they are located substantially under the centre of the drill frame 7, to the position shown in Figure 6, where they are substantially transversely aligned with the transport wheels 4 and 5. This permits the seed drill 1 to be towed in a tight turn without scrubbing of the transport wheels 4, 5 or depth control wheels 23 to 27.

Referring again now to figure 7, this shows a pair of hydraulic rams 31 connected to the respective lower connection bars 29 and 30 of the parallel linkage previously discussed. In the "in work" configuration the hydraulic rams 31 are free floating, but when in a "transport" configuration these are used to raise the drill frame 7.

With reference to Figures 8 and 9, these show the seed drill 1 of Figures 1 to 7 with the drill frame 7 in the raised "transport configuration". Here the hydraulic rams 31 of Figure 7 have been raised, raising the upper tie bar 28 and lower connection bars 29 and 30 of the parallel linkage mechanism, as can be mostly clearly seen from Figure 9. This raises the central portion 8 of the drill frame 7, together with the seed tubes 19, tines 20 and depth control wheel 23 mounted thereon, well clear of the ground ready for transportation. Additionally, the drill frame 7, being located behind the hopper 6, permits the outer wings 11 and 12 to be "double folded" over the inner wings 9 and 10, as shown, so that they can be accommodated above the transport wheels 4 and 5 behind the hopper 6, without the frame 7 extending much beyond the width of the hopper 6. Furthermore, as will be appreciated from Figure 9, the drill frame 7 is substantially accommodated above the transport wheels 4 and 5, avoiding the drill frame 7 providing any significant cantilever effect about the transport wheels 4 and 5.

Referring now to Figure 10, there is illustrated a section of the right hand outer wing 12 of the drill frame 7. This shows the tines 20 spring mounted to the drill frame 7 in a conventional manner. Attached to each tine 20 is a respective seed tube 19 and also a disc coulter 33.

The disc coulters 33 are an optional feature which may or may not be fitted to the seed drill 1, depending on the use to which the seed drill 1 is to be put or on the soil conditions.

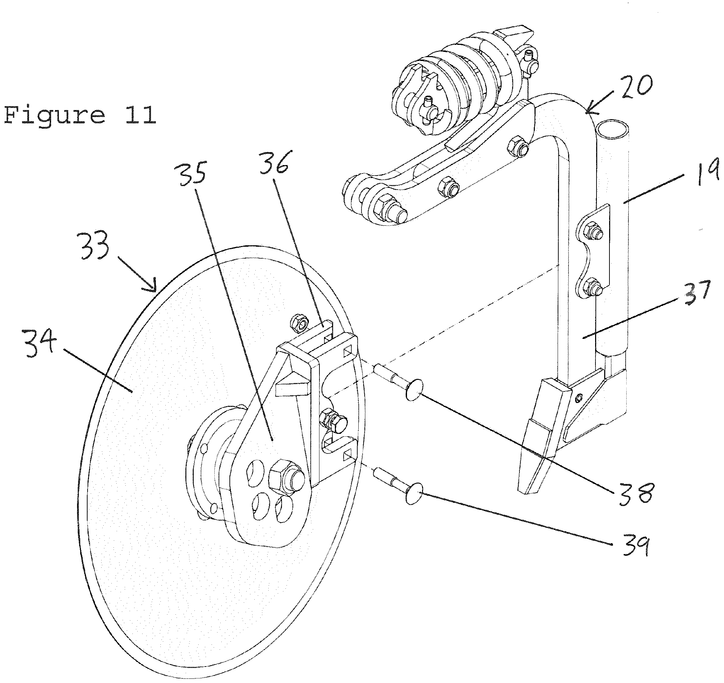

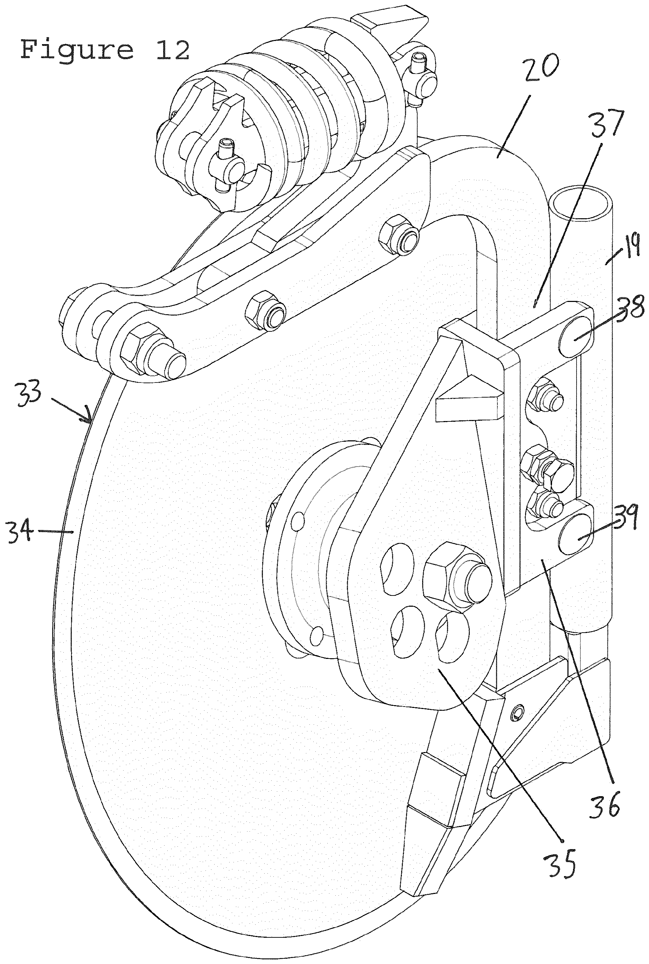

Referring to Figure 11, this shows a tine 20 with a seed tube 19 mounted to the back thereof. Shown separately is the disc coulter 33 which comprises a disc 34 mounted on a hub 35. The hub 35 comprises a mounting 36 arranged to fit over a leg 37 of the tine 20, as illustrated in Figure 12, where it is secured in place by fastenings 38 and 39.

The disc coulter 33 may thus easily be fastened to a standard tine leg 37, enabling disc coulters to be employed on seed drills having standard tines without having to either remove the tines from a frame or reconfigure the frame. Such disc coulters 33 may be used with the seed drill illustrated in Figures 1 to 10, but may have other applications.

The invention has been described above with reference to the accompanying Figures, however it will be appreciated that many other alternative embodiments are possible within the scope of the appended claims.

## Claims

1. A seed drill (1) comprising a hopper (6) and a tool carrier having a drill frame (7) from which seed is dispensed into or onto the ground, the hopper being supported in use by a towing hitch (3) located at a front end of the seed drill (1) and at least two transport wheels (4, 5) located behind the hopper (6), wherein the drill frame (7) is arranged to be able to in use move up and down relative to the hopper (6) and the transport wheels (4, 5), **characterised in that** the drill frame (7) is rectangular and the transport wheels (4, 5) are located inside the rectangular drill frame (7).

2. A seed drill (1) as claimed in claim 1 wherein the drill frame comprises a plurality of tools (20) for opening furrows and/or for dispensing seed and wherein some of the said tools (20) are located forward of the transport wheels (4, 5) and some of said tools (20) are located rearward of said transport wheels (4, 5).

3. A seed drill (1) as claimed in any preceding claim wherein the drill frame (7) is free floating relative to the hopper (6) and the transport wheels (4, 5).

4. A seed drill (1) as claimed in any preceding claim wherein the drill frame (7) is supported by a plurality of depth control wheels (23-27) separate to the transport wheels.

5. A seed drill (1) as claimed in claim 4 wherein the depth control wheels are all fixed in a forward facing direction.

6. A seed drill (1) as claimed in claim 4 or 5 wherein the depth control wheels are arranged to be raised relative to the drill frame (7) but remain in contact with the ground when in an in work drilling configuration and are arranged to be lowered to raise the drill frame (7) and tools (10) carried thereon to assist when turning.

7. A seed drill (1) as claimed in claim 6 wherein, when lowered, the depth control wheels (23-27) are substantially in transverse alignment with the transport wheels (4, 5).

8. A seed drill (1) as claimed in any one of claims 4 to 5 wherein the depth control wheels (23-27) and transport wheels (4, 5) are in transverse alignment.

9. A seed drill (1) as claimed in any one of claims 4 to 8 wherein, when in an in work configuration, the depth control wheels (23-27) are located substantially on a transverse centre line of the drill frame (7).

10. A seed drill (1) as claimed in any one of claims 4 to 9 further comprising one or more actuators (31) arranged to lower the drill frame (7) to an in work configuration and to raise the drill frame (7) to a transport configuration, where the depth control wheels (23-27) are raised clear of the ground, wherein when in the in work configuration the drill frame (7) is supported by the depth control wheels (23-27) and is free floating relative to the transport wheels (4, 5) and the hopper (6).

11. A seed drill (1) as claimed in any one of claims 4 to 10 wherein the drill frame (7) is connected to the transport wheels (4, 5) and hopper (6) via a parallel linkage (28, 29), permitting the drill frame (7) to move up and down relative to the transport wheels (4, 5).

12. A seed drill (1) as claimed in any proceeding claim wherein the drill frame (7) comprises a central portion (8), which in a transport configuration is supported by the transport wheels (4, 5), and two wings (11, 12) extending to respective sides of the central portion (8), which wings (11, 12) may be folded upwardly.

13. A seed drill (1) as claimed in any proceeding claim comprising arrays of tools (20) transversely aligned across the drill frame (7), wherein at least some tools (20) are in longitudinal alignment with the transport wheels (4, 5) and, in order to permit the transport wheels (4, 5) to be accommodated in the drill frame (7), are set back relative to what would otherwise be adjacent corresponding tools (20).

14. A seed drill (1) as claimed in any preceding claim further comprising a plurality of seed tubes (19) transversely spaced across the drill frame (7), the seed drill (1) further comprising means to selectively prevent seed being dispensed from selected seed tubes (19) which are longitudinally aligned with the transport wheels (4, 5).

## Patentansprüche

1. Einzelkornsämaschine (1), umfassend: einen Trichter (6) und einen Geräteträger mit einem Drillrahmen (7), von dem aus Saatgut in oder auf den Boden abgegeben wird, wobei der Trichter im Einsatz von einer Anhängevorrichtung (3), die an einem vorderen Ende der Einzelkornsämaschine (1) angeordnet ist, und mindestens zwei Transporträdern (4, 5), die hinter dem Trichter (6) angeordnet sind, gestützt wird, wobei der Drillrahmen (7) so angeordnet ist, dass er sich im Einsatz im Verhältnis zum Trichter (6) und den Transporträdern (4, 5) auf und ab bewegen kann, **dadurch gekennzeichnet, dass** der Drillrahmen (7) rechteckig ist und die Transporträder (4, 5) innerhalb des rechteckigen Drillrahmens (7) angeordnet sind.

2. Einzelkornsämaschine (1) gemäß Anspruch 1, wobei der Drillrahmen mehrere Werkzeuge (20) zum Öffnen von Furchen und/oder Abgeben von Saatgut umfasst und wobei einige dieser Werkzeuge (20) vor den Transporträdern (4, 5) und einige dieser Werkzeuge (20) hinter den Transporträdern (4, 5) angeordnet sind.

3. Einzelkornsämaschine (1) gemäß einem der vorhergehenden Ansprüche, wobei der Drillrahmen (7) im Verhältnis zum Trichter (6) und den Transporträdern (4, 5) freischwimmend ist.

4. Einzelkornsämaschine (1) gemäß einem der vorhergehenden Ansprüche, wobei der Drillrahmen (7) von mehreren Tiefeneinstellungsrädern (23-27) gestützt wird, die getrennt von den Transporträdern sind.

5. Einzelkornsämaschine (1) gemäß Anspruch 4, wobei die Tiefeneinstellungsräder alle in einer nach vorn gerichteten Richtung fixiert sind.

6. Einzelkornsämaschine (1) gemäß Anspruch 4 oder 5, wobei die Tiefeneinstellungsräder in einer Arbeits-Drillkonfiguration so angeordnet sind, dass sie im Verhältnis zum Drillrahmen (7) erhöht sind, aber in Kontakt mit dem Boden bleiben, und beim Wenden so angeordnet sind, dass sie abgesenkt werden, um den Drillrahmen (7) und die daran getragenen Werkzeuge (10) anzuheben.

7. Einzelkornsämaschine (1) gemäß Anspruch 6, wobei die Tiefeneinstellungsräder (23-27), wenn sie abgesenkt sind, in Querrichtung im Wesentlichen auf die Transporträder (4, 5) ausgerichtet sind.

8. Einzelkornsämaschine (1) gemäß einem der Ansprüche 4 bis 5, wobei die Tiefeneinstellungsräder (23-27) und Transporträder (4, 5) in Querrichtung aufeinander ausgerichtet sind.

9. Einzelkornsämaschine (1) gemäß einem der Ansprüche 4 bis 8, wobei die Tiefeneinstellungsräder (23-27) in einer Arbeitskonfiguration im Wesentlichen auf einer quer verlaufenden Mittellinie des Drillrahmens (7) angeordnet sind.

10. Einzelkornsämaschine (1) gemäß einem der Ansprüche 4 bis 9, ferner umfassend:
mindestens einen Stellantrieb (31), der so angeordnet ist, dass er den Drillrahmen (7) auf eine Arbeitskonfiguration absenkt und den Drillrahmen (7) auf eine Transportkonfiguration, bei der die Tiefeneinstellungsräder (23-27) vom Boden abgehoben werden, anhebt, wobei der Drillrahmen (7) in der Arbeitskonfiguration von den Tiefeneinstellungsrädern (23-27) gestützt wird und im Verhältnis zu den Transporträdern (4, 5) und dem Trichter (6) freischwimmend ist.

11. Einzelkornsämaschine (1) gemäß einem der Ansprüche 4 bis 10, wobei der Drillrahmen (7) über ein Parallelgestänge (28, 29) mit den Transporträdern (4, 5) und dem Trichter (6) verbunden ist, das dem Drillrahmen (7) eine Auf- und Abbewegung im Verhältnis zu den Transporträdern (4, 5) ermöglicht.

12. Einzelkornsämaschine (1) gemäß einem der vorhergehenden Ansprüche, wobei der Drillrahmen (7) einen Mittelteil (8) umfasst, der in einer Transportkonfiguration von den Transporträdern (4, 5) gestützt wird, und zwei Flügel (11, 12), die sich zu den jeweiligen Seiten des Mittelteils (8) erstrecken, wobei diese Flügel (11, 12) nach oben geklappt werden können.

13. Einzelkornsämaschine (1) gemäß einem der vorhergehenden Ansprüche, die Anordnungen von Werkzeugen (20) umfasst, welche in Querrichtung über den Drillrahmen (7) verteilt ausgerichtet sind, wobei zumindest einige Werkzeuge (20) in Längsrichtung auf die Transporträder (4, 5) ausgerichtet sind und, damit die Transporträder (4, 5) im Drillrahmen (7) untergebracht werden können, im Verhältnis zu den Werkzeugen (20), die andernfalls daneben angeordnet wären, zurückgesetzt sind.

14. Einzelkornsämaschine (1) gemäß einem der vorhergehenden Ansprüche, ferner mehrere Saatleitungen (19) umfassend, die in Querrichtung über den Drillrahmen (7) verteilt beabstandet sind, wobei die Einzelkornsämaschine (1) ferner Mittel umfasst, um selektiv zu verhindern, dass Saatgut aus ausgewählten Saatleitungen (19) abgegeben wird, die in Längsrichtung auf die Transporträder (4, 5) ausgerichtet sind.

## Revendications

1. Semoir (1) comprenant une trémie (6) et un porte-outil doté d'un cadre de semoir (7) duquel des graines sont distribuées dans ou sur le sol, la trémie étant supportée, en cours d'usage, par un crochet de remorquage (3), situé à une extrémité antérieure du semoir (1), et au moins deux roues de transport (4, 5) situées derrière la trémie (6), le cadre de semoir (7) étant agencé de façon à pouvoir être soulevé ou baissé relativement à la trémie (6) et aux roues de transport (4, 5), **caractérisé en ce que** le cadre de semoir (7) est rectangulaire et les roues de transport (4, 5) sont situées au sein du cadre de semoir (7) rectangulaire.

2. Semoir (1) selon la revendication 1, le cadre de semoir comprenant une pluralité d'outils (20) pour l'ouverture de sillons et/ou pour la distribution de graines, et certains desdits outils (20) étant situés en avant des roues de transport (4, 5), et certains desdits outils (20) étant situés en arrière desdites roues de transport (4, 5).

3. Semoir (1) selon une quelconque des revendications précédentes, le cadre de semoir (7) flottant librement relativement à la trémie (6) et aux roues de transport (4, 5).

4. Semoir (1) selon une quelconque des revendications précédentes, le cadre de semoir (7) étant supporté par une pluralité de roues de contrôle de la profondeur (23-27) séparées des roues de transport.

5. Semoir (1) selon la revendication 4, les roues de contrôle de la profondeur étant toutes fixes dans une direction tournée vers l'avant.

6. Semoir (1) selon la revendication 4 ou 5, les roues de contrôle de la profondeur étant agencées d'une part de façon à pouvoir être soulevées relativement au cadre de semoir (7), mais à rester au contact du sol lorsqu'elles se trouvent dans une configuration de fraisage de travail, d'autre part de façon à être baissées pour soulever le cadre de semoir (7) et les outils (10) portés sur celui-ci, afin de faciliter les virages.

7. Semoir (1) selon la revendication 6, dans lequel, lorsqu'on les baisse, les roues de contrôle de la profondeur (23-27) sont substantiellement alignées transversalement avec les roues de transport (4, 5).

8. Semoir (1) selon une quelconque des revendications 4 à 5, les roues de contrôle de la profondeur (23-27) et les roues de transport (4, 5) étant alignées transversalement.

9. Semoir (1) selon une quelconque des revendications 4 à 8, dans lequel, dans une configuration de fraisage de travail, les roues de contrôle de la profondeur (23-27) sont situées substantiellement sur un axe transversal du cadre de semoir (7).

10. Semoir (1) selon une quelconque des revendications 4 à 9, comprenant en outre un ou plusieurs actionneurs (31) agencés pour baisser le cadre de semoir (7) dans une configuration de travail, et pour soulever le cadre de semoir (7) dans une configuration de transport, lorsque les roues de contrôle de la profondeur (23-27) sont soulevées au-dessus du sol, le cadre de semoir (7) étant supporté, dans la configuration de travail, par les roues de contrôle de la profondeur (23-27), et flottant librement relativement aux roues de transport (4, 5) et à la trémie (6).

11. Semoir (1) selon une quelconque des revendications 4 à 10, le cadre de semoir (7) étant raccordé aux roues de transport (4, 5) et à la trémie (6) par le biais d'une tringlerie parallèle (28, 29), en permettant le déplacement vers le haut et vers le bas du cadre de semoir (7) relativement aux roues de transport (4, 5).

12. Semoir (1) selon une quelconque des revendications précédentes, le cadre de semoir (7) comprenant une partie centrale (8), qui, dans une configuration de transport, est supportée par les roues de transport (4, 5), et deux ailes (11, 12) étant déployées sur des côtés respectifs de la partie centrale (8), lesdites ailes (11, 12) pouvant être pliées vers le haut.

13. Semoir (1) selon une quelconque des revendications précédentes, comprenant des réseaux d'outils(20) alignés transversalement à travers le cadre de semoir (7), au moins certains outils (20) étant alignés longitudinalement avec les roues de transport (4, 5), et, afin de permettre aux roues de transport (4, 5) de se placer dans le cadre de semoir (7), sont en retrait relativement à ce qui seraient autrement des outils correspondants adjacents (20).

14. Semoir (1) selon une quelconque des revendications précédentes, comprenant une pluralité de tubes d'ensemencement (19) espacés transversalement à travers le cadre de semoir (7), le semoir (1) comprenant en outre un dispositif pour empêcher de façon sélective la distribution de graines par des tubes d'ensemencement (19) sélectionnés, qui sont alignés longitudinalement avec les roues de transport (4, 5).
